# EUROPEAN PATENT APPLICATION

(11) **EP 4 825 672 A1**
(43) Date of publication of application: **21.10.2026**
(21) Application number: 25850097.4
(22) Date of filing: 23.05.2025
(51) Int. Cl.: B60R 25/20, B60R 25/24, B60R 16/023, B60H 1/00, B60N 2/56, B62D 1/06

(54) **FENCE-BASED VEHICLE PREPARATION CONTROL METHOD AND SYSTEM FOR VEHICLE, AND VEHICLE, DEVICE, MEDIUM AND PROGRAM**

(30) Priority: 08.08.2024 CN 202411086781
(71) Applicant: Chery Automobile Co., Ltd., Wuhu, Anhui 241006 (CN)
(72) Inventor: LIU, Panfei, Wuhu, Anhui 241006 (CN); FENG, Liwei, Wuhu, Anhui 241006 (CN); MENG, Rui, Wuhu, Anhui 241006 (CN)
(74) Representative: Adamson Jones
(86) International application number: PCT/CN2025/096890
(87) International publication number: WO 2026/031728

(57) **Abstract**

Disclosed are a fence-based vehicle preparation control method and system for a vehicle, and a vehicle, a device, a medium and a program, which belong to the technical field of automobile intelligence. The method comprises: when it is identified that a signal enters a fence-based vehicle preparation activation area, sending a request instruction to a controller system; on the basis of request execution state feedback of the controller system, sending an enabling instruction to an area control system for adjusting the environment in a vehicle; and the area control system sending an enabling execution state to a cabin domain control system and performing feedback. By means of identifying a scenario in which a user uses a vehicle, the environment in the vehicle is adjusted in a timely manner when in emergency or in user negligence, thereby improving the user experience in using the vehicle.

## Description

The present disclosure claims priority to Chinese Patent Application No. 202411086781.0, filed on August 8, 2024, and entitled "VEHICLE FENCE STANDBY VEHICLE CONTROL METHOD, VEHICLE, SYSTEM, EQUIPMENT, MEDIUM AND PROGRAM", the entire contents of which are incorporated herein by reference.

### TECHNICAL FIELD

The present disclosure relates to the technical field of automobile intelligence, and specifically relates to a geofenced preconditioning control method for a vehicle, vehicle, system, device, medium, and program.

### BACKGROUND

With the vigorous development of the automotive industry and the rapid advancement of technology, automobiles have evolved beyond mere means of transportation, becoming living spaces that integrate technology, comfort, and convenience. However, under extreme weather conditions, especially during scorching summers and chilly winters, the regulation of the in-vehicle environment becomes a crucial factor affecting the driving experience. Despite modern cars generally being equipped with air conditioning systems and seat heating/ventilation functions, traditional manual activation methods prove inadequate in the face of sudden high or low temperature challenges. This is especially true when the car owner is carrying heavy loads, in regions with poor signal, or forgets vehicle preconditioning in advance. The discomfort in the in-vehicle environment not only diminishes the pleasure of travel but may also pose a potential threat to driving safety.

In the current market, some automobile manufacturers have attempted to alleviate this issue through remote control via smartphone apps or Bluetooth proximity start technology. Although these solutions have improved convenience to some extent, they are still limited by factors such as users' subjective willingness to operate, external signal stability, and device compatibility, and thus fail to fully and instantly respond to car owners' needs. Especially in emergency situations or in the case where users are negligent, these solutions often fail to come into effect immediately, and thus cannot fundamentally address users' sore points.

### SUMMARY

In view of the issue in prior art where the in-vehicle environment cannot be adjusted promptly in emergency situations or due to user negligence, the present disclosure provides a geofenced preconditioning control method for a vehicle, which identifies scenarios that a user wants to use the vehicle and promptly adjusts the in-vehicle environment in emergency situations or situations where the user is negligent, thereby improving the user's vehicle usage experience.

In order to achieve the above objectives, the present disclosure provides the following technical solutions.

In a first aspect, the present disclosure provides a geofenced preconditioning control method for a vehicle, including: sending a request instruction to a controller system in response to detecting a signal entering a geofenced preconditioning activation region; sending a start instruction to a zone control system to regulate an in-vehicle environment based on request execution status feedback from the controller system; and sending, by the zone control system, start execution status to a cockpit domain control system, and providing feedback.

As a further improvement of the present disclosure, sending the request instruction to the controller system in response to detecting the signal entering the geofenced preconditioning activation region includes: activating a geofenced preconditioning function in response to a BNCM digital key system detecting that the signal enters the geofenced preconditioning activation region; and upon activation of the geofenced preconditioning function, sending, by the BNCM digital key system, a high-voltage request instruction to a VCC vehicle control unit in the controller system.

As a further improvement of the present disclosure, sending, based on the request execution status feedback from the controller system, the start instruction to the zone control system to regulate the in-vehicle environment includes: executing, by a VCC vehicle control unit in the controller system, a high-voltage request instruction, and feeding back, by the VCC vehicle control unit, request execution status to a BNCM digital key system; sending, by the BNCM digital key system, the start instruction to the zone control system in response to the BNCM digital key system detecting that the high-votage request instruction is successfully executed based on the request execution status; and executing, by the zone control system, the start instruction to regulate the in-vehicle environment; wherein executing, by the zone control system, the start instruction includes: executing, by the zone control system, activation or deactivation of a seat ventilation and heating function; and executing, by the zone control system, activation or deactivation of a steering wheel heating function.

As a further improvement of the present disclosure, sending, by the zone control system, the execution status to the cockpit domain control system, and providing feedback include: executing, by the zone control system, the start instruction, sending the start execution status to the cockpit domain control system, and providing feedback to the cockpit domain control system; and sending, by a BNCM digital key system, the start execution status to a mobile terminal and a vehicle display device.

As a further improvement of the present disclosure, sending, by the BNCM digital key system, the start execution status to the vehicle display device includes: sending, by the BNCM digital key system, an enable status signal to the cockpit domain control system to cause the cockpit domain control system determine whether the vehicle is in an enabled state; and sending, by the BNCM digital key system, the start execution status to the vehicle display status in response to the vehicle being in the enabled state and the BNCM digital key system detecting that any of doors of the vehicle is opened.

In a second aspect, the present disclosure provides a geofenced preconditioning control system for a vehicle , including: a detecting module, configured to send a request instruction to a controller system in response to detecting a signal entering a geofenced preconditioning activation region; an executing module, configured to send a start instruction to a zone control system to regulate an in-vehicle environment based on request execution status feedback from the controller system; and a feedback module, configured to send, by the zone control system, start execution status to a cockpit domain control system, and provide feedback.

In a third aspect, the present disclosure provides a vehicle, including the described geofenced preconditioning control system for the vehicle.

In a fourth aspect, the present disclosure provides an electronic device including a memory, a processor, and one or more computer programs stored in the memory and runnable on the processor, wherein the processor, when running the one or more computer programs, is caused to perform processes of the described geofenced preconditioning control method for a vehicle.

In a fifth aspect, the present disclosure provides a computer-readable storage medium, storing one or more computer programs therein, wherein the one or more computer programs, when loaded and run by a processor, cause the processor to perform processes of the geofenced preconditioning control method for a vehicle.

In a sixth aspect, the present disclosure provides a computer program product, including one or more computer instructions, wherein the one or more computer instructions, when loaded and run by a processor, cause the processor to perform processes of the geofenced preconditioning control method for a vehicle.

Compared with the prior art, the present disclosure achieves the following beneficial effects.

In the fast-paced modern life, people often face various unexpected situations, such as emergency travel and sudden changes in weather, making the instant adjustment of the in-vehicle environment particularly crucial. The core of the present disclosure lies in its intelligent recognition mechanism, which is capable of capturing signals indicating the user's entry into a predetermined "geofenced preconditioning activation region". This region can be flexibly set, and once the user enters this region, the system automatically initiates the preconditioning procedure without requiring manual operation by the user, achieving a truly "seamless" intelligent service. Upon detecting the activation signal, the present disclosure quickly sends the request instruction to the controller system through an efficient information transmission mechanism. Subsequently, the controller system sends a start instruction to the zone control system based on the request execution status feedback, and the zone control system is responsible for specifically executing the environmental adjustment tasks, such as adjusting the in-vehicle temperature, ensuring that the user can enjoy the most suitable in-vehicle environment before entering the vehicle. As the final executor and feedback provider of environmental adjustment, the cockpit domain control system in the present disclosure adjusts the in-vehicle environmental parameters in real time by receiving execution status information from the zone control system, ensuring that each adjustment accurately meets the user's needs. At the same time, the system gradually optimizes the adjustment strategy based on the user's usage habits and preferences, providing a more personalized driving experience. In emergency situations, such as extreme weather or vehicle malfunctions, the geofenced preconditioning control method for a vehicle of the present disclosure demonstrates its powerful safety guarantee function. By adjusting the in-vehicle environment to its optimal state in advance, it not only effectively alleviates the user's tension caused by unexpected situations but also to a certain extent avoids health risks caused by discomfort in the in-vehicle environment. In addition, the system also forms a linkage with other safety systems of the vehicle (such as emergency braking, collision warning, etc.), jointly building a comprehensive safety protection network to safeguard the user's every journey.

### BRIEF DESCRIPTION OF DRAWINGS

The drawings described herein are only for explanatory purposes and are not intended to limit the scope of the present disclosure in any way. In the drawings:
FIG. 1 is a flow diagram of a geofenced preconditioning control method for a vehicle according to the present disclosure;
FIG. 2 is an interaction diagram of a geofenced preconditioning control system for a vehicle according to the present disclosure;
FIG. 3 is a schematic diagram of the geofenced preconditioning function in the present disclosure;
FIG. 4 is a schematic diagram of a geofenced preconditioning trigger region according to some embodiments of the present disclosure;
FIG. 5 is a workflow diagram of the present disclosure;
FIG. 6 is a schematic structural diagram of a geofenced preconditioning control system for a vehicle according to the present disclosure; and
FIG. 7 is a schematic diagram of an electronic device according to some embodiments of the present disclosure.

### DETAILED DESCRIPTION

To enable those skilled in the technical field to better understand the technical solutions of the present disclosure, the technical solutions of the present disclosure are clearly and comprehensively described hereafter in conjunction with the accompanying drawings of the present disclosure. The described embodiments are merely a part of the embodiments of the present disclosure, not all embodiments. Based on the embodiments of the present disclosure, all other embodiments obtained by those of ordinary skill in the art without creative effort shall fall within the scope of protection of the present disclosure.

Unless otherwise defined, all technical and scientific terms used in this document have the same meaning as commonly understood by those skilled in the technical field of the present disclosure. The terms used in this document in the specification of the present disclosure are solely for the purpose of describing specific embodiments and are not intended to limit the present disclosure. The term "and/or" used in this document includes any and all combinations of one or more related listed items.

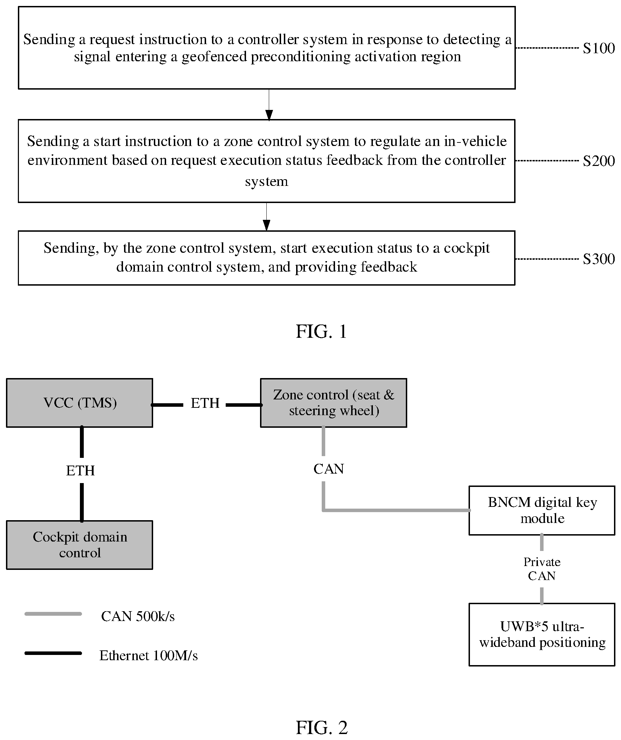

In view of the issue in the existing technology where the in-vehicle environment cannot be adjusted promptly in emergency situations or due to user negligence, the present disclosure provides a geofenced preconditioning control method for a vehicle. As illustrated in FIG. 1, the method includes the following processes.

In S100, a request instruction is sent to a controller system in response to detecting a signal entering a geofenced preconditioning activation region.

In S200, a start instruction is sent to a zone control system to regulate an in-vehicle environment based on request execution status feedback from the controller system.

In S300, the zone control system sends start execution status to a cockpit domain control system and provides feedback.

The present disclosure is capable of recognizing scenarios where the user wants to use the vehicle, and in emergency situations or in the case where the user is negligent, promptly adjusts the in-vehicle environment to improve the user's vehicle usage experience.

The following further explains and illustrates the present disclosure with specific drawings.

The present disclosure includes a cockpit domain control system, a body network control module (BNCM) digital key system, a zone control system, and a controller system.

As shown in FIG. 2, the controller system is connected to the zone control system and the cockpit domain control system, and the zone control system is also connected to the BNCM digital key system.

The cockpit domain control system, as the switch setting and status information interaction unit of the present disclosure, is capable of achieving the following functions: setting the enable switch for the geofenced preconditioning function to turn on (10, 15, 20 minutes) and turn off; displaying the status of the geofenced preconditioning enable switch; providing display of the actual working status of the air conditioner; providing display of the seat ventilation and heating status, as well as the steering wheel heating status; and providing a status text pop-up prompt in the case that the geofenced preconditioning control is activated.

The controller system includes the vehicle central computer (VCC) vehicle control unit and the thermal management system (TMS) air conditioning unit, capable of achieving the following functions: receiving and executing high voltage power-up and power-down requests from the BNCM digital key system; receiving and executing air conditioning on/off instructions from the BNCM digital key system; feeding back the high voltage execution status to the BNCM digital key system; and feeding back the air conditioning execution status to both the cockpit domain control system and the BNCM digital key system.

The zone control system, as the execution unit for seat ventilation and heating as well as steering wheel heating in the present disclosure, is capable of achieving the following functions: receiving the activation information for intelligent air conditioning control from the BNCM digital key system; executing the on/off control of the seat ventilation and heating function; executing the on/off control of the steering wheel heating function; providing status information of seat ventilation and heating as well as steering wheel heating to the cockpit domain control system and BNCM digital key system; providing information such as vehicle power mode, door status, and security status to the BNCM digital key system; and routing signals.

The BNCM digital key system, as the processing unit for digital key information and geofenced preconditioning, is capable of achieving the following functions: acquiring connection status information between the digital key and BNCM; receiving key position information (received signal strength indicator (RRSI) field strength value) fed back by the positioning module; providing activation information indicating whether the geofenced preconditioning is turned on to the zone control system and controller system; providing the enable status of the geofenced preconditioning function to the cockpit domain control system; providing a text pop-up prompt to mobile devices, such as mobile apps, in the case that the geofenced preconditioning function is activated; and providing information to vehicle display devices in the case that the geofenced preconditioning function is activated.

Vehicle display devices include the central display screen and speakers.

The central display screen is capable of achieving the following functions: providing users with a geofenced preconditioning switch setting interface; displaying the status of the geofenced preconditioning enable switch; displaying the actual on/off status of the air conditioning; and displaying a text pop-up prompt in the case that the geofenced preconditioning function is activated.

The speaker is capable of achieving the following functions: broadcasting the working status prompts of the geofenced preconditioning function.

The initial state of the geofenced preconditioning control method for the vehicle of the present disclosure is set to be closed by default; that is, the function is disabled by default at the factory. The car's settings interface is configured through the central display screen in some embodiments.

There is an enable switch setting item within the central display screen. The status parameter of the switch is stored in the electrically erasable programmable read-only memory (EEPROM) of the BNCM digital key system. Each time the vehicle is started, the system defaults to the last status set by the host, and the BNCM digital key system stores the status.

In the ignition off (IGNOFF) status, the vehicle is in a stationary state, with all four doors and two lids closed, the vehicle is successfully armed, and the geofenced preconditioning system is in an enabled state. The BNCM digital key system monitors Bluetooth key information in real-time via the positioning module. In the case that a user enters the geofencing trigger zone with a valid Bluetooth key, the BNCM digital key system determines that the user has a demand to use the vehicle and sends a high-voltage power-up request to the VCC vehicle control unit in the controller system. In the case that the VCC vehicle control unit is successfully high voltage powered up, the BNCM digital key system simultaneously sends an air conditioning turning-on instruction to the TMS air conditioning unit, and sends the seat ventilation and heating instruction and the steering wheel heating instruction to the zone control system. The TMS air conditioning unit completes the activation of the air conditioning function, and the zone control system completes the activation of the seat ventilation and heating function, as well as the steering wheel heating function.

The TMS air conditioning unit and the zone control system feed back the activation status of the air conditioning and seat steering wheel to the BNCM digital key system via the bus. The BNCM digital key system sends the processed status signal to the cockpit domain control system for pop-up prompts on the central display screen. At the same time, the BNCM digital key system sends a pop-up message about the geofenced preconditioning status through Bluetooth protocol to the mobile app, indicating "Air conditioning and seat heating/ventilation have been activated for you in advance" to inform the user. In the case of successfully activating the air conditioning, the BNCM digital key system starts a timer for 10 minutes (default), 15 minutes, or 20 minutes. Upon completion of the timer, the BNCM digital key system sends a request to power down the high voltage and turn off the air conditioning. In the case that the vehicle is unlocked and any door is opened within 10 minutes, 15 minutes, or 20 minutes, the central display screen displays a pop-up prompt "To provide a comfortable driving experience, air conditioning and seat heating/ventilation have been activated for you in advance", and the voice system broadcasts the prompt. The air conditioning remains activated, and the vehicle is switched to the local mode. To prevent multiple triggers, the BNCM digital key system starts a timer for 30 minutes from the first trigger of the function. In the case that the instruction indicating a key enters the geofenced preconditioning region is triggered again within 30 minutes, the BNCM digital key system does not process it further. Additionally, the BNCM digital key system needs to count the triggers. Subsequent to two triggers, the vehicle needs to be started locally once to reset the count, and at this time, the function is able to be triggered normally again.

The activation conditions for the geofenced preconditioning control method for the vehicle of the present disclosure must simultaneously meet the following requirements.

The power mode of the vehicle is ON or Comfort mode, and the geofenced preconditioning control enable switch on the vehicle's host setting interface is in the on state.

The closing conditions for the geofenced preconditioning control method for the vehicle of the present disclosure must meet the following requirements.

The host setting interface of the vehicle is in a closed state; and the enable switch of the host is turned off.

The activation conditions for the geofenced preconditioning control method for the vehicle of the present disclosure must simultaneously meet the following requirements.

The vehicle's power mode is OFF; the vehicle's speed is zero; all four doors of the vehicle are closed; the vehicle is in an armed state; a valid key enters the geofencing region; the count within the BNCM digital key system is less than 2; and the vehicle's high-voltage battery SOC (State of Charge) is greater than or equal to 20%.

In the case that the standby conditions of the geofenced preconditioning control method for the vehicle in the present disclosure do not meet any of the above activation conditions, the vehicle is in a standby state.

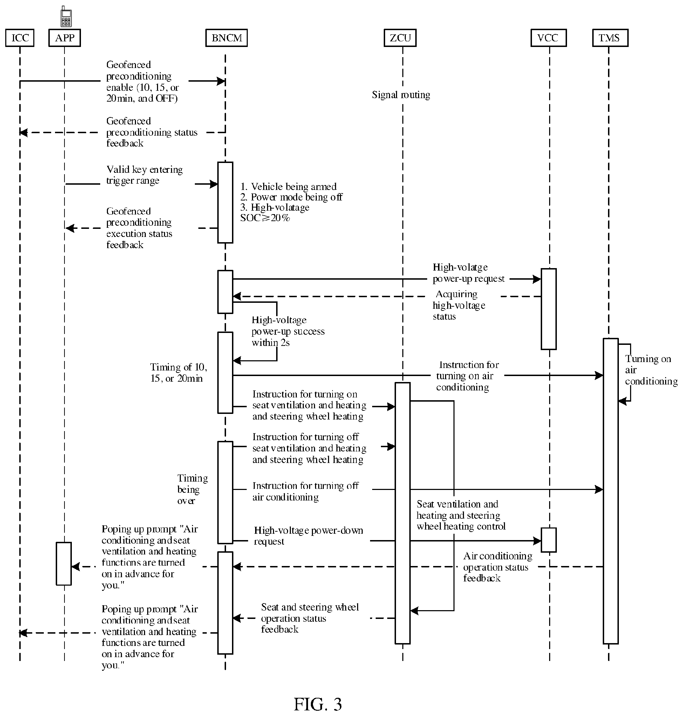

The triggering process of the geofenced preconditioning control method for the vehicle in the present disclosure is shown in FIG. 3.

In response to receiving the air conditioning turn-on instruction sent by the BNCM digital key system, the TMS air conditioning unit determines the temperature inside the vehicle and starts the air conditioning to lower or raise the temperature inside the vehicle, with the air conditioning automatically maintaining AUTO mode. The TMS air conditioning unit system needs to combine internal and external temperature sensors to determine whether the current vehicle scenario needs heating or cooling, and periodically sends a flag bit to the BNCM digital key system.

The BNCM digital key system needs to perform processing and judging based on the cooling and heating flag bits sent by the TMS air conditioning unit, to determine whether to send a seat heating instruction or a seat ventilation instruction in response to the geofenced preconditioning function being triggered.

The timing process of the BNCM digital key system is based on the settings of 10, 15, or 20 minutes on the central display screen for function activation and timing. Upon the end of the timing, a request to power off the high voltage and close the function needs to be sent.

The initial count value of the BNCM digital key system is 0. In the case that the geofenced preconditioning function is activated, the count value increments by 1, and the count value accumulates incrementally. In the case that the count reaches 2, the vehicle needs to be locally started once, and the count is reset to 0. Otherwise, the geofenced preconditioning function needs to be restricted.

Every time the geofenced preconditioning function is triggered, a timer starts for 30 minutes. In the case that the geofenced preconditioning function is considered as being activated during this 30-minute period, any further received function activation request is not be responded to or processed.

In the case that the geofenced preconditioning function reaches the enabled state, status information is pushed to both the central display screen and the mobile app. The activation results or activation failure messages of the air conditioning, seat heating and ventilation, and steering wheel heating functions are displayed through pop-ups, animations, or voice prompts. The prompts on the central display screen and the app are as follows.

Pop-up prompt on the central display screen: image + text + voice broadcast, as shown in Table 1.

**Table 1 Pop-up prompts on the central display screen**

| Air conditioning execution status | Seat ventilation and heating execution status | Steering wheel heating execution status | Image prompt content | Text prompt content | Voice broadcast | Remark |
|---|---|---|---|---|---|---|
| Y | Y | Y | Air conditioning is on, seat ventilation and heating are on, steering wheel heating is on. | Geofenced preconditioning has been successfully initiated. | Broadcast the corresponding tex content. | In the case t where the cooling scenario is triggered, the steering wheel heating instruction t is not associated. Only in the case where the heating scenario is triggered, the steering wheel t heating function is associated. |
| | | N | Air conditioning is on, seat ventilation and heating are on, but steering wheel heating is not on. | Geofenced preconditioning has been successfully initiated, but the steering wheel heating function is not turned on. Please check. | Broadcast the corresponding tex content. | |
| | N | Y | Air conditioning is on, seat ventilation and heating are not on, and steering wheel heating is on. | Geofenced preconditioning has been successfully initiated, but the seat ventilation and heating are not turned on. Please check. | Broadcast the corresponding tex content. | |
| | | N | Air conditioning is on, seat ventilation and heating are not on, and steering wheel heating is not on. | Geofenced preconditioning has been successfully initiated, but neither the seat ventilation and heating nor the steering wheel heating is turned on. Please check. | Broadcast the corresponding text content. | |
| N | Y | Y | Air conditioning is not on, seat ventilation and heating are on, and steering wheel heating is on. | Geofenced preconditioning has been successfully initiated, but the air conditioning system has not been turned on. Please check. | Broadcast the corresponding tex content. | |
| | | N | The air conditioning is not on, the seat ventilation and heating are on, and the steering wheel heating is not on. | Geofenced preconditioning has been successfully initiated, but the air conditioning and steering wheel heating systems are not turned on. Please check. | Broadcast the corresponding tex content. | |
| | N | Y | Air conditioning is not on, seat ventilation and heating are not on, and steering wheel heating is on. | Geofenced preconditioning fails to be initiated, only the steering wheel heating function is turned on. Please check the vehicle. | Broadcast the corresponding tex content. | |
| | | N | The air conditioning is not on, the seat ventilation and heating are not on, and the steering wheel heating is not on. | Geofenced preconditioning fails to be initiated. Please check the vehicle. | Broadcast the corresponding text content. | |

Pop-up prompt on mobile APP: picture + text, as shown in Table 2.

**Table 2: Pop-up prompts on mobile APP**

| Air conditioning execution status | Seat ventilation and heating execution status | Steering wheel heating execution status | Image prompt content | Text prompt content | remark |
|---|---|---|---|---|---|
| Y | Y | Y | Air conditioning is on, seat ventilation and heating are on, and steering wheel heating is on. | Geofenced preconditioning has been successfully initiated. | In the case where the cooling scenario is triggered, the steering wheel heating instruction is not associated. Only in the case where the heating scenario is triggered, the steering wheel heating function is associated. |
| | | N | Air conditioning is on, seat ventilation and heating are on, but steering wheel heating is not on. | Geofenced preconditioning has been successfully initiated, but the steering wheel heating function is not turned on. Please check. | |
| | N | Y | Air conditioning is on, seat ventilation and heating are not on, and steering wheel heating is on. | Geofenced preconditioning has been successfully initiated, but the seat ventilation and heating are not turned on. Please check. | |
| | | N | Air conditioning is on, seat ventilation and heating are not on, and steering wheel heating is not on. | Geofenced preconditioning has been successfully initiated, but neither the seat ventilation and heating nor the steering wheel heating are turned on. Please check. | |
| N | Y | Y | Air conditioning is not on, seat ventilation and heating are on, and steering wheel heating is on. | Geofenced preconditioning has been successfully initiated, but the air conditioning system is not turned on. Please check. | |
| | | N | Air conditioning is not on, seat ventilation and heating are on, and steering wheel heating is not on. | Geofenced preconditioning has been successfully initiated, but the air conditioning and steering wheel heating systems are not turned on. Please check. | |
| | N | Y | Air conditioning is not on, seat ventilation and heating are not on, and steering wheel heating is on. | Geofenced preconditioning fails to be initiated, only the steering wheel heating function is turned on. Please check the vehicle. | |
| | | N | Air conditioning is not on, seat ventilation and heating are not on, and steering wheel heating is not on. | Geofenced preconditioning fails to be initiated. Please check the vehicle. | |

The following further explains and illustrates the present disclosure with specific embodiments.

### Embodiment

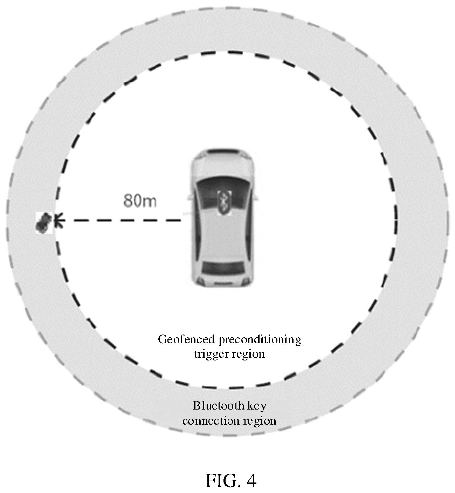

As shown in FIG. 4, draw a circle with a radius of 80m around the vehicle as the origin. This range is designated as the vehicle preconditioning geofence. The region within the circle is the trigger region of the vehicle preconditioning geofence. Once a legitimate key enters this zone, the geofenced preconditioning function is activated. The BNCM digital key system needs to perform trigger counting. In the case that the count reaches 2, the count needs to be reset before the function can be activated, and new triggers are no longer responded to, and the count times do not accumulate during the function trigger timing period.

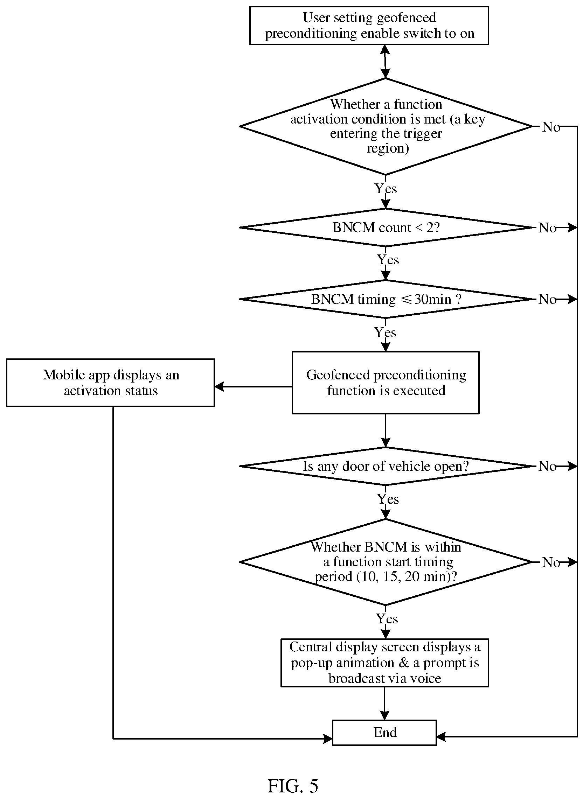

As shown in FIG. 5, the workflow of a geofenced preconditioning control method for the vehicle according to the present disclosure is as follows.

First, the user finds the soft switch for the geofenced preconditioning function (10, 15, or 20 min, and OFF) on the central display screen. The user selects one of 10, 15, or 20 min, for example, selecting 10 min. At this time, the geofenced preconditioning function enters the enabled state based on the period of 10 minutes. Then, the user can normally close the doors and lock the car, and the vehicle is in a low-power consumption state waiting to be activated.

In the case that the next time the user uses the vehicle normally, as they approach the vehicle, the Bluetooth key transitions from an unconnected state to an automatically connected state. At this point, the key is located within the Bluetooth connection region. In the case that the BNCM digital key system recognizes that the key has entered the geofenced preconditioning activation region from the Bluetooth connection region, the geofenced preconditioning function is immediately activated and a timer is started. The BNCM digital key system first sends a high-voltage request instruction to the VCC vehicle control unit. The VCC vehicle control unit completes the high-voltage power-on action within 2 seconds and feeds back the status to the BNCM digital key system. In response to a successful high-voltage power-on, the BNCM digital key system sends instructions for air conditioning on, seat ventilation or heating, and steering wheel heating or steering wheel heating off to the zone control system. The zone control system executes the activation of corresponding functions and feeds back the status information to the cockpit domain control system and the BNCM digital key system. The BNCM digital key system sends the function activation status information to the mobile app via Bluetooth protocol and pops up a window (Geofenced precondition is activated for you, and air conditioning and seat ventilation functions have been activated) for the user.

In the case that the user approaches the vehicle, unlocks the vehicle, and opens any door, in response to the BNCM digital key system still being within the 10-minute timing period, the BNCM digital key system sends a prompt flag bit to the central display screen. The central display screen displays the geofenced preconditioning state and drives the voice broadcast to play relevant prompts. The vehicle switches to the local state, and relevant functions related to the geofenced preconditioning (such as air conditioning, seat ventilation and heating, or steering wheel heating) are maintained. In the case that the BNCM digital key system timing is over, the count is reset to zero.

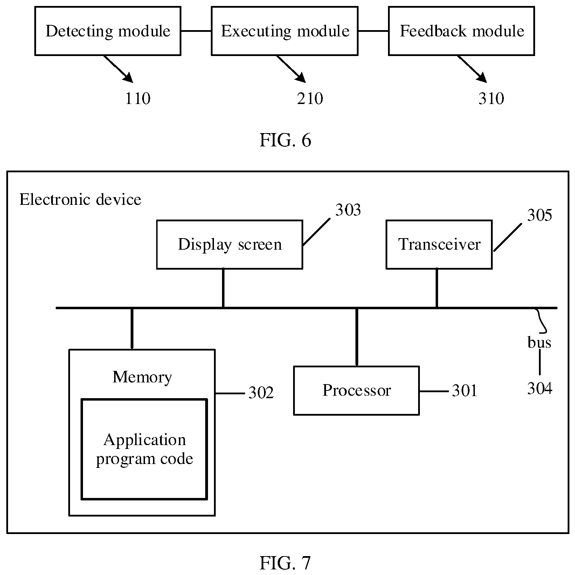

The second objective of the present disclosure is to propose a geofenced preconditioning control system for a vehicle. As shown in FIG. 6, the system includes: a detecting module 110, configured to send a request instruction to a controller system in response to detecting a signal entering a geofenced preconditioning activation region; an executing module 210, configured to send a start instruction to a zone control system to regulate an in-vehicle environment based on request execution status feedback from the controller system; a feedback module 310, configured to send, by the zone control system, start execution status to a cockpit domain control system, and provide feedback.

The third objective of the present disclosure is to propose a vehicle, which includes the geofenced preconditioning control system for the vehicle .

As shown in FIG. 7, the fourth objective of the present disclosure is to provide an electronic device, which includes a processor 301, a memory 302, and a display screen 303. Both the memory 302 and the display screen 303 are connected to the processor 301, for example, via a bus 304. In some embodiments, the electronic device further includes a transceiver 305. It should be noted that in practical applications, the number of transceivers 305 is not limited to one, and the structure of the electronic device does not constitute a limitation on the embodiments of the present disclosure.

In some embodiments, the processor 301 includes a CPU (Central Processing Unit), a general-purpose processor, a DSP (Digital Signal Processor), an ASIC (Application Specific Integrated Circuit), an FPGA (Field Programmable Gate Array), or other programmable logic devices, transistor logic devices, hardware components, or any combination thereof. The processor is capable of implementing or executing various exemplary logical blocks, modules, and circuits described in conjunction with the disclosure of the present disclosure. In some embodiments, the processor 301 is a combination for implementing computing functions, such as a combination of one or more microprocessors, a combination of DSP and microprocessor, etc.

In some embodiments, the bus 304 includes a pathway for transmitting information between the aforementioned components. In some embodiments, the bus 304 is a PCI (Peripheral Component Interconnect) bus, an EISA (Extended Industry Standard Architecture) bus, or the like. In some embodiments, the bus 304 is divided into an address bus, a data bus, a control bus, and the like.

In some embodiments, the memory 302 is a ROM (Read Only Memory) or other types of static storage devices capable of storing static information and instructions, a RAM (Random Access Memory) or other types of dynamic storage devices capable of storing information and instructions, as well as EEPROM (Electrically Erasable Programmable Read Only Memory), CD-ROM (Compact Disc Read Only Memory) or other optical storage, optical disc storage (including compact disc, laser disc, optical disc, digital versatile disc, Blu-ray disc, etc.), magnetic disk storage media or other magnetic storage devices, or any other medium capable of carrying or storing desired program code in the form of instructions or data structures and being accessed by a computer, but is not limited to these.

The memory 302 is configured to store the application program code for executing the present disclosure, and the execution is controlled by the processor 301. The processor 301 is configured to execute the application program code stored in the memory 302 to perform the content shown in the aforementioned method embodiments.

The electronic device shown in FIG. 7 is merely an example, and should not impose any limitations on the functions and scope of use of embodiments of the present disclosure.

The fifth objective of the present disclosure is to provide a computer-readable storage medium, which stores one or more computer programs therein. The one or more computer programs, when loaded and run by a processor, cause the processor to perform processes of the method embodiments shown in FIG. 1 as described above. In some embodiments, the storage medium includes a memory storing one or more instructions, wherein the one or more instructions, when loaded and run by a processor of the electronic device, cause the electronic device to perform the aforementioned method.

In some embodiments, the computer-readable storage media is a tangible device that retains and stores instructions for use by instruction execution devices. In some embodiments, computer-readable storage media include, but are not limited to, electrical storage devices, magnetic storage devices, optical storage devices, electromagnetic storage devices, semiconductor storage devices, or any combination thereof. Specifically, in some embodiments, the computer-readable storage media include portable computer disks, hard disks, USB flash drives, random access memory (RAM), read-only memory (ROM), erasable programmable read-only memory (EPROM or flash memory), static random access memory (SRAM), compact disc-read only memory (CD-ROM), digital versatile discs (DVD), memory sticks, floppy disks, optical disks, magnetic disks, mechanically encoded devices, and any combination thereof.

The sixth objective of the present disclosure is to provide a computer program product including one or more computer instructions. The one or more computer instructions, when loaded and run by a processor, cause the processor to perform processes of the method embodiments shown in FIG. 1 above and achieve the same technical effects. To avoid repetition, further details are omitted here.

Upon reading the above description, numerous embodiments and applications beyond the provided examples are evident to those skilled in the art. Hence, the scope of this teaching should not be determined by reference to the above description, but rather by reference to the full scope of the preceding claims and their equivalents. For the sake of comprehensiveness, all articles and references, including disclosures of patent applications and publications, are hereby incorporated by reference. The omission of any aspect of the disclosed subject matter in the preceding claims is not intended to waive such subject matter, nor should it be construed as an indication that the applicant does not consider such subject matter as part of the disclosed inventive subject matter.

The above content provides a further detailed explanation of the present disclosure, and it should not be assumed that the specific embodiments of the present disclosure are limited thereto. For those skilled in the technical field to which the present disclosure belongs, several simple deductions or substitutions can be made without departing from the concept of the present disclosure, and all of them should be deemed to fall within the scope of protection determined by the claims submitted for the present disclosure.

## Claims

1. A geofenced preconditioning control method for a vehicle, comprising:
sending a request instruction to a controller system in response to detecting a signal entering a geofenced preconditioning activation region;
sending, based on request execution status feedback from the controller system, a start instruction to a zone control system to regulate an in-vehicle environment; and
sending, by the zone control system, start execution status to a cockpit domain control system, and providing feedback.

2. The method according to claim 1, wherein sending the request instruction to the controller system in response to detecting the signal entering the geofenced preconditioning activation region comprises:
activating a geofenced preconditioning function in response to a BNCM digital key system detecting that the signal enters the geofenced preconditioning activation region; and
upon activation of the geofenced preconditioning function, sending, by the BNCM digital key system, a high-voltage request instruction to a VCC vehicle control unit in the controller system.

3. The method according to claim 1, wherein sending, based on the request execution status feedback from the controller system, the start instruction to the zone control system to regulate the in-vehicle environment comprises:
executing, by a VCC vehicle control unit in the controller system, a high-voltage request instruction, and feeding back, by the VCC vehicle control unit, request execution status to a BNCM digital key system;
sending, by the BNCM digital key system, the start instruction to the zone control system in response to the BNCM digital key system detecting, based on the request execution status, that the high-voltage request instruction is successfully executed; and
executing, by the zone control system, the start instruction to regulate the in-vehicle environment;
wherein executing, by the zone control system, the start instruction comprises:
executing, by the zone control system, activation or deactivation of a seat ventilation and heating function; and
executing, by the zone control system, activation or deactivation of a steering wheel heating function.

4. The method according to claim 1, wherein sending, by the zone control system, the execution status to the cockpit domain control system, and providing feedback comprise:
executing, by the zone control system, the start instruction, sending the start execution status to the cockpit domain control system, and providing feedback to the cockpit domain control system; and
sending, by a BNCM digital key system, the start execution status to a mobile terminal and a vehicle display device.

5. The method according to claim 4, wherein sending, by the BNCM digital key system, the start execution status to the vehicle display device comprises:
sending, by the BNCM digital key system, an enable status signal to the cockpit domain control system to cause the cockpit domain control system determine whether the vehicle is in an enabled state; and
sending, by the BNCM digital key system, the start execution status to the vehicle display status in response to the vehicle being in the enabled state and the BNCM digital key system detecting that any of doors of the vehicle is opened.

6. A geofenced preconditioning control system for a vehicle, comprising:
a detecting module, configured to send a request instruction to a controller system in response to detecting a signal entering a geofenced preconditioning activation region;
an executing module, configured to send, based on request execution status feedback from the controller system, a start instruction to a zone control system to regulate an in-vehicle environment; and
a feedback module, configured to send, by the zone control system, start execution status to a cockpit domain control system, and provide feedback.

7. A vehicle, comprising: the geofenced preconditioning control system for a vehicle as defined in claim 6.

8. An electronic device, comprising: a memory, a processor, and one or more computer programs stored in the memory and runnable on the processor, wherein the processor, when running the one or more computer programs, is caused to perform processes of the geofenced preconditioning control method as defined in any one of claims 1 to 5.

9. A computer-readable storage medium, storing one or more computer programs therein, wherein the one or more computer programs, when loaded and run by a processor, cause the processor to perform processes of the geofenced preconditioning control method as defined in any one of claims 1 to 5.

10. A computer program product, comprising one or more computer instructions, wherein the one or more computer instructions, when loaded and executed by a processor, cause the processor to perform processes of the geofenced preconditioning control method as defined in any one of claims 1 to 5.
